# FASCICULE DE BREVET EUROPEEN

(11) **EP 3 775 525 B1**
(45) Date de publication et mention de la délivrance du brevet: **29.04.2026**
(21) Numéro de dépôt: 19711930.8
(22) Date de dépôt: 25.03.2019
(51) Int. Cl.: F02K 5/00, F02C 7/32, F01D 15/10, H02K 7/18

(54) **COMPRESSEUR A MACHINE ÉLECTRIQUE TOURNANTE POUR TURBOMACHINE AXIALE**
VERDICHTER MIT ROTIERENDER ELEKTRISCHER MASCHINE FÜR AXIALE TURBOMASCHINE
COMPRESSOR HAVING A ROTARY ELECTRIC MACHINE FOR AXIAL TURBOMACHINE

(30) Priorité: 10.04.2018 BE 201805243
(43) Date de publication de la demande: 17.02.2021
(73) Titulaire: Safran Aero Boosters SA, 4041 Herstal (BE)
(72) Inventeur: PEREZ, Rafael, 4041 Herstal (BE)
(74) Mandataire: Ipsilon Luxembourg
(86) Numéro de dépôt international: PCT/EP2019/057431
(87) Numéro de publication internationale: WO 2019/197144

(56) Documents cités:
- EP-A1- 2 280 150
- DE-A1- 102015 214 255
- GB-A- 1 147 730
- US-A1- 2011 024 567
- US-A1- 2011 025 157

## Description

### Domaine technique

L'invention se rapporte au domaine de la production d'énergie électrique et à l'entrainement en rotation d'une turbomachine, notamment de son compresseur. L'invention a également trait à une turbomachine axiale, tel un turboréacteur d'avion ou un turbopropulseur d'aéronef. L'invention propose également un procédé de compression d'un fluide dans une turbomachine.

### Technique antérieure

L'emploi de l'énergie électrique augmente dans le fonctionnement d'un aéronef. Le courant est utilisé pour différents actionneurs électriques afin de remplacer des actionneurs hydrauliques.

Le document US 2010/0326050 A1 divulgue un turboréacteur comprenant une soufflante couplée à une turbine par l'intermédiaire d'un réducteur épicycloïdal. La turbine entraîne également un compresseur et un générateur de courant électrique. Or, l'énergie électrique produite reste limitée. Par ailleurs, la chaleur produite peut nuire aux aimants permanents, si bien que la longévité du générateur est lourdement impactée.

Le document de brevet publié EP 2 280 150 A1 divulgue un compresseur de turbomachine comprenant une machine électrique intégrée qui est configurée pour générer un courant électrique pour le fonctionnement de composants accessoires et pour assurer un démarrage de ladite turbomachine.

Cependant, la solution proposée par le document présente une marge d'amélioration, notamment pour augmenter la production électrique ainsi que la longévité et la fiabilité de la machine électrique.

### Résumé de l'invention

### Problème technique

L'invention a pour objectif de résoudre au moins un des problèmes posés par l'art antérieur. Plus précisément, l'invention a pour objectif d'augmenter la production électrique dans une turbomachine. L'invention a également pour objectif d'améliorer la longévité et la fiabilité d'un générateur d'électricité de turbomachine. L'invention a également pour objectif de proposer une solution simple, résistante, légère, économique, fiable, et d'inspection aisée.

### Solution technique

De manière générale, l'invention a pour objet une turbomachine axiale avec un compresseur équipé d'une machine électrique à flux magnétique axial, la définition des aimants et/ou des bobines restant facultative.

L'invention a pour objet une turbomachine axiale, notamment un turboréacteur d'aéronef, la turbomachine comprenant un compresseur avec un rotor et un stator, une turbine, une chambre de combustion axialement entre le compresseur et la turbine, et une machine électrique tournante couplée en rotation au compresseur, le compresseur comprenant une virole interne (50) supportant une rangée d'aubes statoriques (26) s'étendant radialement extérieurement à la virole interne (50), remarquable en ce que la virole interne (50) comprend une paroi (52) radialement externe par rapport à la machine électrique tournante (30) et délimitant une veine primaire du compresseur (4 ; 6), la machine électrique tournante étant à flux magnétique axial, et comprenant une rangée annulaire de bobines à flux magnétique axial, une première rangée annulaire d'aimants permanents (40) à flux magnétique axial, une deuxième rangée annulaire d'aimants permanents (40) à flux axial, et un écart axial (E) entre la première rangée d'aimants (40) et la deuxième rangée d'aimants (40), ledit écart axial (E) étant plus court axialement que la paroi externe (52) de la virole (50) et/ou que les aubes statoriques (26), la rangée annulaire de bobines occupe l'écart axial, les bobines sont solidaires du stator, et les aimants permanents sont solidaires du rotor.

Selon des modes avantageux de l'invention, la turbomachine peut comprendre une ou plusieurs des caractéristiques suivantes, prises isolément ou selon toutes les combinaisons techniques possibles :
- Le compresseur comprend un stator externe supportant la rangée annulaire de bobines.
- Le stator externe comprend la rangée annulaire d'aubes statoriques, au moins une desdites aubes présentant des liaisons électriques traversant radialement ladite aube et connectées électriquement à la rangée annulaire de bobines, ou à au moins une des bobines.
- La virole interne a une épaisseur radiale dans laquelle la rangée annulaire de bobines est radialement disposée.
- La virole interne comprend la paroi externe délimitant une veine primaire du compresseur et un support interne dans lequel la rangée annulaire de bobines ou au moins une bobine est disposée, le support interne étant notamment plus court axialement que la paroi externe.
- Au moins une ou chaque bobine de la rangée annulaire de bobines comprend un noyau magnétique traversant axialement la bobine correspondante.
- Le compresseur comprend un dispositif d'étanchéité dans l'épaisseur radiale de la machine électrique tournante afin d'assurer une étanchéité entre le rotor et le stator.
- Le compresseur comprend une entrée amont, la rangée annulaire d'aimants et/ou la rangée annulaire de bobines étant disposée axialement au niveau de l'entrée amont.
- Le rotor comprend un corps principal avec un premier matériau, notamment un matériau amagnétique, et une pièce ferromagnétique en contact magnétique de la rangée annulaire d'aimants permanents.
- La pièce ferromagnétique est apte à former un circuit magnétique en combinaison d'une des bobines, ledit circuit magnétique traversant axialement ladite bobine, la pièce ferromagnétique comprenant notamment une portion axiale entre deux portions radiales.
- Le rotor comprend un tambour aubagé avec un voile annulaire, la pièce ferromagnétique étant plaquée radialement contre ledit voile, ou le rotor comprend deux disques aubagés, la pièce ferromagnétique formant une liaison mécanique entre lesdits disques.
- La pièce ferromagnétique est une première pièce ferromagnétique, le rotor comprenant une rangée annulaire de pièces ferromagnétiques à laquelle appartient la première pièce, lesdites pièces de la rangée étant séparées angulairement et chacune associées à au moins un aimant de la rangée annulaire d'aimants.
- Le compresseur comprend un jeu axial, les aimants permanents chevauchant axialement et/ou traversant axialement le jeu axial.
- La turbomachine comprend un palier support de soufflante disposé à l'intérieur du compresseur et axialement au niveau de la rangée annulaire de bobines.
- Le rotor comprend une plateforme annulaire supportant une rangée annulaire d'aubes rotoriques, la rangée annulaire d'aimants étant disposée à l'intérieur de la plateforme annulaire, lesdits aimants étant en conduction thermique avec la rangée annulaire d'aubes rotoriques.
- La machine électrique est réversible et/ou synchrone.
- La ou chaque pièce ferromagnétique est disposée radialement à l'intérieur de la rangée de bobines.
- La pièce ferromagnétique forme une jonction mécanique dans le rotor.
- Les aimants permanents de la rangée annulaire touchent le ou les entrefers axiaux.
- La rangée annulaire de bobines est disposée axialement entre la première rangée d'aimants et la deuxième rangée d'aimants, notamment d'une même machine électrique.
- La machine électrique comprend au moins un ou deux entrefer axiaux, la bobine ou la rangée annulaire de bobines, étant disposée axialement entre lesdits entrefers et recevant axialement un flux magnétique traversant lesdits entrefers.
- La bobine à flux axial est disposée dans l'épaisseur radiale du support interne.
- La bobine est plus courte axialement que la virole interne, et éventuellement que le support interne.
- Les bobines présentent des axes d'enroulement de spires parallèles et/ou orientés axialement.
- Le dispositif d'étanchéité comprend des surfaces d'étanchéités formées sur une virole interne, notamment sur le support interne, et sur la pièce ferromagnétique.
- Les liaisons électriques sont disposées en amont de ladite aube afin de la dégivrer.

La présente description concerne également un compresseur, éventuellement de turbomachine axiale, le compresseur comprenant un stator avec une rangée annulaire d'aubes statoriques supportant une virole interne, un rotor monté mobile en rotation par rapport au stator, une machine électrique tournante qui présente une rangée de bobines supportées par, et/ou en conduction thermique avec, la virole interne, et une rangée d'aimants permanents portés par le rotor et coopérant de manière magnétique avec les bobines.

L'invention a également pour objet un procédé, de compression d'un fluide compressible par un compresseur de turbomachine axiale remarquable en ce que la turbomachine est selon l'invention, l'au moins une rangée annulaire d'aimants permanents étant solidaires du rotor, et l'au moins une rangée annulaire de bobines étant solidaires du stator, le procédé comprenant les étapes suivantes : (a) rotation du rotor, notamment en prise avec et/ou grâce à une turbine en aval d'une chambre de combustion de la turbomachine; et (b) génération de flux magnétique à l'intérieur des bobines, les bobines étant traversées axialement par du flux magnétique.

Selon des modes avantageux de l'invention, le procédé peut comprendre une ou plusieurs des caractéristiques suivantes, prises isolément ou selon toutes les combinaisons techniques possibles :
- La turbomachine est un turboréacteur d'aéronef, lors de l'étape (b) génération l'aéronef est en vol et la température des aimants est inférieure à 0°C, et la température de l'environnement de l'aéronef est notamment inférieure à 0°C.
- Lors de l'étape (b) génération, les bobines produisent du courant électrique stocké dans un accumulateur.
- Lors de l'étape (b) génération, des différences de tension électrique sont appliquées aux bornes des bobines électriques afin d'entraîner en rotation le rotor du compresseur, éventuellement en combinaison avec la turbine.
- Lors de l'étape (b) génération, le flux magnétique est généré axialement par les aimants, les aimants présentant des pôles opposés axialement.

La présente description concerne également un procédé de production d'énergie électrique par une machine électrique de turbomachine axiale comprenant un compresseur avec un rotor et un stator présentant un redresseur, une turbine, une machine électrique avec une bobine solidaire du stator et un aimant solidaire du rotor, le procédé comprenant les étapes suivantes : (i) rotation du rotor ; (ii) production d'énergie électrique par la bobine, et/ou d'un flux magnétique dans un circuit magnétique de la machine électrique tournante.

Selon un mode avantageux, lors de l'étape (ii) production, le flux magnétique traverse axialement le redresseur du compresseur, et/ou le flux magnétique traverse axialement la virole interne du compresseur, et/ou le procédé comprend en outre une étape (iii) alimentation électrique de la bobine afin de pivoter le rotor.

### Avantages apportés

L'invention permet d'augmenter la capacité à produire de l'électricité grâce au compresseur. Puisque la machine électrique peut être réversible, l'invention peut augmenter le taux de compression. Par ailleurs, la position des aimants dans le compresseur permet de les refroidir, ce qui les éloigne de leur température de curie. La sécurité propre à cette machine s'améliore.

### Brève description des dessins

La figure 1 représente une turbomachine axiale selon l'invention.
La figure 2 est un schéma d'un compresseur de turbomachine selon l'invention.
La figure 3 illustre une machine électrique tournante selon l'invention.
La figure 4 est un diagramme d'un procédé de compression de fluide selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

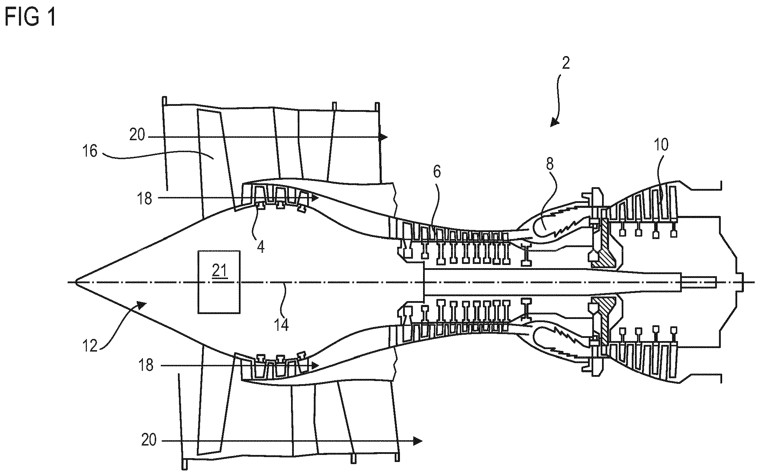

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 21, peut réduire la vitesse de rotation de la soufflante et/ou du compresseur basse-pression par rapport à la turbine associée. Le flux secondaire peut être accéléré de sorte à générer une réaction de poussée nécessaire au vol d'un avion recevant des passagers. Les flux primaire 18 et secondaire 20 sont des flux annulaires coaxiaux et emmanchés l'un dans l'autre.

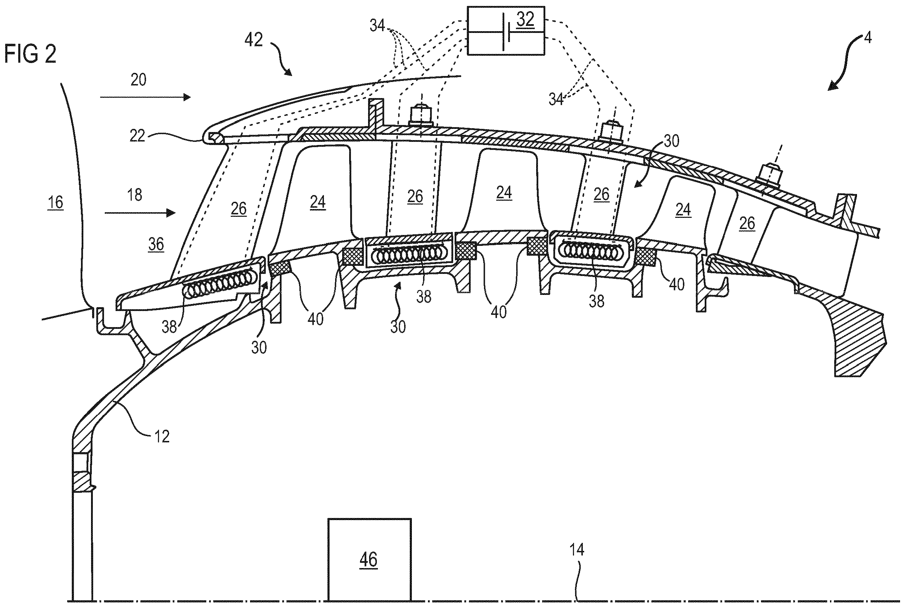

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois.

Le compresseur basse-pression 4 comprend plusieurs redresseurs, en l'occurrence quatre, qui contiennent chacun une rangée d'aubes statoriques 26. Certaines aubes statoriques peuvent être à orientation réglable, également appelé aubes à calage variable. De telles aubes sont couramment appelées aubes VSV, dont l'acronyme correspond à l'expression anglo-saxonne « Variable Stator Vane ».

Les aubes statoriques 26 s'étendent essentiellement radialement depuis un carter extérieur, et peuvent y être fixées et immobilisées à l'aide d'axes. Au sein d'une même rangée, les aubes statoriques 26 sont régulièrement espacées les unes des autres, et présentent une même orientation angulaire dans le flux. Avantageusement, les aubes d'une même rangée sont identiques.

Afin de produire de l'électricité, la turbomachine peut comprendre une ou plusieurs machines électriques tournantes 30, par exemple dans le compresseur 4. En outre, la turbomachine peut comprendre un accumulateur électrique 32, ou batterie électrique, recevant et stockant l'énergie électrique produite par les machines tournantes 30. A cet effet, des liaisons électriques 34 peuvent traverser le flux primaire 18, et être supportées par les aubes statoriques 26. Optionnellement au moins une liaison peut être supportée par les aubes statoriques 26 en entrée 36 du compresseur 4, c'est à dire au niveau du bec de séparation 22. Alternativement, l'accumulateur 32 est propre à l'aéronef correspondant.

Par exemple, au moins une machine électrique 30 comprend une rangée annulaire de bobines 38 magnétiques et/ou électriques coopérant de manière magnétique avec une rangée annulaire d'aimants permanents 40. Les bobines 38 sont solidaires du stator 42, et les aimants permanents 40 sont solidaires du rotor 12. Par exemple, chaque bobine 38 peut recevoir le flux magnétique généré par des aimants 40 associés. Lors de la rotation du rotor 12, le déplacement des aimants permanents 40 devant les bobines 38 y crée une différence de potentiel électrique, ce qui permet de produire un courant électrique.

Chaque bobine 38 peut être formée d'un enroulement de spires matérialisées par un fils électrique. L'axe d'enroulement peut être axial, c'est-à-dire sensiblement le long de l'axe de rotation 14.

La turbomachine peut comprendre un palier 46 reliant de manière pivotante la soufflante 16 au stator 42. Ce palier 46 peut être disposé à l'intérieur du rotor 12, et éventuellement au niveau de la ou d'une des machines électriques 30. Le rotor 12 du compresseur peut également être articulé par rapport au stator 42 grâce à ce palier 46.

Dans l'option où le rotor 12 forme un tambour aubagé, il peut comprendre des orifices recevant les aimants permanents 40. Alternativement, les aimants peuvent être placés dans des poches borgnes. Des tels agencements peuvent être prévus pour un rotor formé par une série de disques.

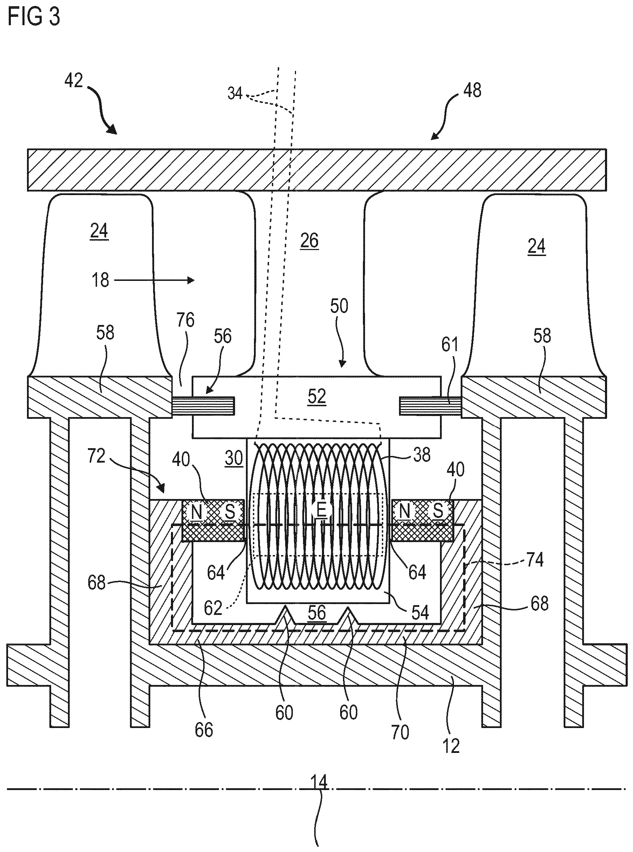

La figure 3 esquisse une portion de la turbomachine avec une machine électrique tournante 30. La portion peut correspondre à une partie de compresseur. Le compresseur peut être similaire ou identique à celui en figure 2. De même, la machine électrique tournante 30 peut correspondre à l'une de celles représentées en figure 2. Le rotor 12 est ici dans une position angulaire où deux aimants 40 sont en face de la bobine 38.

La partie peut au moins matérialiser un étage de compression. Il peut s'agir d'un redresseur 48. La rangée d'aubes statoriques 26 peut supporter une virole interne 50 en porte-à-faux. Cette dernière peut être liée aux extrémités internes des aubes statoriques 26. Au moins une ou chaque aube statorique 26 présente un bord d'attaque. Les liaisons électriques 34 peuvent être placées axialement au niveau des bords d'attaque afin de dégivrer l'aube correspondante, les liaisons électriques étant notamment dimensionnées de sorte à chauffer par effet joule lorsque les bobines reçoivent ou génèrent du courant électrique.

La virole interne 50 comprend une paroi externe 52 de forme annulaire et délimitant l'intérieur du flux primaire 18. Optionnellement, la virole interne 50 comporte un support interne 54, par exemple de forme annulaire. Ce support interne 54 peut être séparé des aubes statoriques 26 par la paroi externe 52, si bien que la bobine 38 peut être isolée du flux primaire 18 par la paroi 52 et notamment par le support 54.

Le compresseur peut comprendre au moins un dispositif d'étanchéité 56. Le dispositif d'étanchéité 56 peut être autour de la machine électrique 30, et/ou à l'intérieur de la machine électrique 30. Un des dispositifs d'étanchéité 56, éventuellement externe, peut être ménagé entre la paroi 52 de la virole 50 et une plateforme 58 recevant une rangée d'aubes rotoriques 24. Un tel dispositif d'étanchéité 56 peut comprendre un joint à brosse 61, par exemple entre la paroi 52 et les plateformes 58. Au moins un dispositif d'étanchéité 56, par exemple un joint à brosse 61, peut entourer la machine électrique tournante 30. Ainsi, la machine 30 est protégée du flux primaire 18.

Un des dispositifs d'étanchéité 56 peut comprendre des léchettes 60, également appelées dents annulaires, coopérant de manière étanche avec le support interne 54.

Au moins une ou chaque bobine 38 de la rangée annulaire peut comprendre un noyau magnétique 62. Chaque noyau magnétique 62 peut traverser axialement la bobine associée, et éventuellement être en regard axialement des aimants 40 opposés en amont et en aval. Le ou les noyaux 62 peuvent être logés dans le support 54.

Les noyaux 62 peuvent définir au moins un, préférentiellement deux entrefers 64, notamment un entrefer 64 amont et un entrefer aval 64. Chaque entrefer 64 peut être un entrefer axial, et peut être ménagé axialement entre l'un des aimants 40 et le noyau 62 ou la bobine 38. Chaque entrefer 64 peut être axialement entre un des aimants 40 et le support 54. Les entrefers 64 et le support 54, respectivement la bobine et/ou le noyau, occupent un écart axial E entre les aimants permanents 40. Cet écart axial E est plus court axialement que la paroi externe 52 de la virole 50 et/ou que les aubes statoriques 26. La bobine 38 peut être plate. La position axiale des aimants permanents 40 est telle qu'ils sont à distance des aubes rotoriques 24 et/ou du voile du tambour 58. Ainsi, il n'y a pas de chevauchement axial entre les aubes rotoriques 24 et les aimants 40 ou entre le voile 58 et les aimants 40.

La machine électrique 30 peut comprendre une pièce ferromagnétique 66, éventuellement une rangée annulaire de pièces ferromagnétiques 66 séparées angulairement et distinctes. La ou chaque pièce ferromagnétique 66 peut être portée par le rotor 12, et/ou peut présenter une forme en « U ». La ou chaque pièce ferromagnétique 66 peut être associée, et en contact d'au moins un aimant 40, ou de deux aimants 40.

La ou chaque pièce ferromagnétique 66 peut présenter au moins une portion radiale 68, ou deux portions radiales 68 ; et éventuellement une portion axiale 70, qui peut relier les portions radiales 68. Ces dernières peuvent être en contact des aimants 40. Le dispositif d'étanchéité 56, notamment les léchettes 60, peut être formé sur la portion axiale 70. Celle-ci peut s'étendre sur toute la longueur axiale de la ou des bobines 38. Les portions radiales 68 peuvent être disposées en amont et en aval de la bobine 38, et peuvent d'avantage s'étendre radialement vers l'intérieur.

Selon la position angulaire du rotor 12, la pièce ferromagnétique 66 peut encadrer la bobine 38, notamment afin de définir un circuit magnétique 72. Un tel circuit magnétique 72 peut traverser axialement la bobine grâce à ses lignes 74 de champ magnétique décrivant une boucle qui traverse les entrefers 64. A l'intérieur de la bobine 38 et des aimants 40, les lignes 74 de champ magnétique sont principalement axiales. Leur inclinaison par rapport à l'axe de rotation est inférieure à : 25°, ou 10°.

Bien qu'une seule bobine 38, une seule pièce 66, une seule aube statorique 26, seulement deux aimants 40 ne soient représentés et décrits, le présent enseignement peut être appliqué à chacune des rangées annulaires auxquelles ils appartiennent.

Le stator 42 et le rotor 12 peuvent présenter un jeu axial 76 à l'une de leur interface. Le jeu axial 76 peut être circulaire. Par exemple, le jeu axial peut être ménagé entre une plateforme 78 et la virole interne 50, notamment entre une plateforme 78 et la paroi annulaire 52. Le jeu axial 76 peut être fermé par un dispositif d'étanchéité 56, notamment un joint à brosse 61. Des aimants 40 peuvent s'étendre axialement au niveau du jeu axial 76, et optionnellement traverser le jeu axial 76.

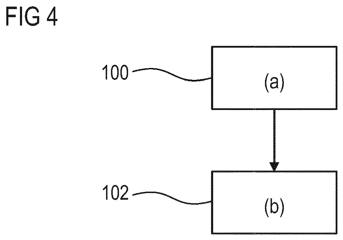

La figure 4 représente un diagramme d'un procédé de compression, par exemple de flux primaire, dans un compresseur de turbomachine. Le compresseur comme la turbomachine peuvent correspondre à ceux décrits en relation avec les figures 1 à 3.

Le procédé peut comprendre les étapes suivantes, éventuellement réalisées dans l'ordre qui suit :
(a) rotation 100 du rotor en prise avec la turbine recevant le flux issu de la chambre de combustion;
(b) génération 102 de flux magnétique à l'intérieur des bobines.

L'invention s'applique au domaine de l'aéronautique. Ainsi, la turbomachine peut correspondre à un turboréacteur d'aéronef volant à une température négative, par exemple de - 40°C en altitude. Lors de l'étape (b) génération 102 l'aéronef est en vol et la température des aimants est inférieure à 0°C. Les bobines et éventuellement les noyaux, peuvent être refroidis par les aubes statoriques.

Lors de l'étape (b) génération 102, chaque bobine présente une différence de tension électrique à ses bornes.

La machine électrique tournante peut fonctionner selon deux modes. Elle peut être soit un générateur de courant et de tension électrique ; ou être un moteur électrique qui actionne le rotor du compresseur afin de participer à l'effort mécanique de compression du flux primaire. Ainsi, lors de l'étape (b) génération 102, les bobines produisent du courant électrique stocké dans un accumulateur, ou reçoivent du courant électrique provenant de l'accumulateur de manière à entraîner en rotation le rotor du compresseur. Le compresseur peut fonctionner de manière hybride car son entraînement peut être assuré par la machine électrique en plus de la turbine. La conception de la turbomachine peut intégrer ce mode de fonctionnement hybride, également appelé fonctionnement mixte, et réduire les pics d'efforts qui sont imposés à la turbine.

## Revendications

1. Turbomachine axiale (2), notamment un turboréacteur d'aéronef, la turbomachine (2) comprenant un compresseur (4 ; 6) avec un rotor (12) et un stator (42), une turbine (10), une chambre de combustion (8) axialement entre le compresseur (4 ; 6) et la turbine (10), et une machine électrique tournante (30) couplée en rotation au compresseur (4 ; 6), le compresseur (4 ; 6) comprenant une virole interne (50) supportant une rangée d'aubes statoriques (26) s'étendant radialement extérieurement à la virole interne (50),
telle que la virole interne (50) comprend une paroi (52) radialement externe par rapport à la machine électrique tournante (30) et délimitant une veine primaire du compresseur (4 ; 6),
la machine électrique tournante (30) étant à flux magnétique axial et comprenant une rangée annulaire de bobines (38) à flux magnétique axial, une première rangée annulaire d'aimants permanents (40) à flux magnétique axial,
**caractérisée en ce qu'**elle comprend
une deuxième rangée annulaire d'aimants permanents (40) à flux axial,
et un écart axial (E) entre la première rangée d'aimants (40) et la deuxième rangée d'aimants (40), ledit écart axial (E) étant plus court axialement que la paroi externe (52) de la virole (50) et/ou que les aubes statoriques (26), la rangée annulaire de bobines (38) occupe l'écart axial (E),
les bobines (38) sont solidaires du stator (42), et les aimants permanents (40) sont solidaires du rotor (12).

2. Turbomachine axiale (2) selon la revendication 1, **caractérisée en ce que** la virole interne (50) a une épaisseur radiale dans laquelle la rangée annulaire de bobines (38) est radialement disposée.

3. Turbomachine axiale (2) selon la revendication 2, **caractérisée en ce que** la virole interne (50) comprend la paroi externe (52) délimitant une veine primaire du compresseur (4 ; 6) et un support interne (54) dans lequel la rangée annulaire de bobines (38) ou au moins une bobine (38) est disposée, le support interne (54) étant plus court axialement que la paroi externe (52).

4. Turbomachine axiale (2) selon l'une des revendications 1 à 3, **caractérisée en ce qu'**au moins une ou chaque bobine (38) de la rangée annulaire de bobines comprend un noyau magnétique (62) traversant axialement la bobine (38) correspondante.

5. Turbomachine axiale (2) selon l'une des revendications 1 à 4, **caractérisée en ce que** le compresseur (4 ; 6) comprend un dispositif d'étanchéité (56) dans l'épaisseur radiale de la machine électrique tournante (30) afin d'assurer une étanchéité entre le rotor (12) et le stator (42).

6. Turbomachine axiale (2) selon l'une des revendications 1 à 5, **caractérisée en ce que** le compresseur (4 ; 6) comprend une entrée amont (36), la rangée annulaire d'aimants (40) et/ou la rangée annulaire de bobines (38) étant disposée axialement au niveau de l'entrée amont (36).

7. Turbomachine axiale (2) selon l'une des revendications 1 à 6, **caractérisée en ce que** le rotor (12) comprend un corps principal avec un premier matériau, notamment un matériau amagnétique, et une pièce ferromagnétique (66) en contact magnétique de la rangée annulaire d'aimants permanents (40).

8. Turbomachine axiale (2) selon la revendication 7, **caractérisée en ce que** la pièce ferromagnétique (66) est apte à former un circuit magnétique (72) en combinaison d'une des bobines (38), ledit circuit magnétique (72) traversant axialement ladite bobine (38), la pièce ferromagnétique (66) comprenant une portion axiale (70) entre deux portions radiales (68).

9. Turbomachine axiale (2) selon l'une des revendications 7 à 8, **caractérisée en ce que** le rotor (12) comprend un tambour aubagé avec un voile annulaire, la pièce ferromagnétique (66) étant plaquée radialement contre ledit voile, ou le rotor (12) comprend deux disques aubagés, la pièce ferromagnétique (66) formant une liaison mécanique entre lesdits disques.

10. Turbomachine axiale (2) selon l'une des revendications 1 à 9, **caractérisée en ce que** le compresseur comprend un jeu axial (76), les aimants permanents (40) chevauchant axialement et/ou traversant axialement le jeu axial (76).

11. Turbomachine axiale (2) selon l'une des revendications 1 à 10, **caractérisée en ce qu'**elle comprend un palier (46) support de soufflante (16) disposé à l'intérieur du compresseur (4 ; 6) et axialement au niveau de la rangée annulaire de bobines (38).

12. Turbomachine axiale (2) selon l'une des revendications 1 à 11, **caractérisée en ce que** le rotor (12) comprend une plateforme annulaire (58) supportant une rangée annulaire d'aubes rotoriques (24), la rangée annulaire d'aimants (40) étant disposée à l'intérieur de la plateforme annulaire (58), lesdits aimants (40) étant en conduction thermique avec la rangée annulaire d'aubes rotoriques (24).

13. Procédé de compression d'un fluide compressible par un compresseur (4 ; 6) de turbomachine axiale (2) **caractérisé en ce que** la turbomachine est selon l'une des revendications 1 à 12, l'au moins une rangée annulaire d'aimants permanents (40) étant solidaires du rotor (12), et l'au moins une rangée annulaire de bobines (38) étant solidaires du stator (42), le procédé comprenant les étapes suivantes :
(a) rotation (100) du rotor (12) en prise avec une turbine (10) en aval d'une chambre de combustion (8) de la turbomachine (2); et
(b) génération (102) de flux magnétique à l'intérieur des bobines (38), les bobines (38) étant traversées axialement par du flux magnétique.

14. Procédé selon la revendication 13, **caractérisé en ce que** la turbomachine (2) est un turboréacteur d'aéronef, lors de l'étape (b) génération (102) l'aéronef est en vol et la température des aimants (40) est inférieure à 0°C, et la température de l'environnement de l'aéronef est inférieure à 0°C.

15. Procédé selon l'une des revendications 13 ou 14, **caractérisé en ce que** lors de l'étape (b) génération (102), les bobines (38) produisent du courant électrique stocké dans un accumulateur (32) et/ou des différences de tension électrique sont appliquées aux bornes des bobines (38) afin d'entraîner en rotation le rotor (12) du compresseur (4 ; 6), éventuellement en combinaison avec la turbine (10).

## Patentansprüche

1. Axiale Turbomaschine (2), insbesondere ein Flugzeugtriebwerk, die Turbomaschine (2) umfasst einen Kompressor (4; 6) mit einem Rotor (12) und einem Stator (42), eine Turbine (10), eine Brennkammer (8) axial zwischen dem Kompressor (4; 6) und der Turbine (10) und eine rotierende elektrische Maschine (30), die rotierend mit dem Kompressor (4; 6) gekoppelt ist, wobei der Kompressor (4; 6) eine innere Buchse (50) umfasst, die eine Reihe von statorischen Schaufeln (26) trägt, die radial außen an der inneren Buchse (50) angeordnet sind, wobei die innere Buchse (50) eine Wand (52) radial außen im Verhältnis zur rotierenden elektrischen Maschine (30) umfasst und eine Hauptströmkante des Kompressors (4; 6) begrenzt, wobei die rotierende elektrische Maschine (30) einen axialen Magnetfluss und eine ringförmige Reihe von Spulen (38) mit einem axialen Magnetfluss, eine erste ringförmige Reihe von Permanentmagneten (40) mit einem axialen Magnetfluss aufweist,
**dadurch gekennzeichnet, dass**
sie eine zweite ringförmige Reihe von Permanentmagneten (40) mit einem axialen Fluss umfasst und einen axialen Abstand (E) zwischen der ersten Reihe von Magneten (40) und der zweiten Reihe von Magneten (40), wobei der genannte axiale Abstand (E) axial kürzer ist als die äußere Wand (52) der Buchse (50) und/oder als die statorischen Schaufeln (26), die ringförmige Reihe von Spulen (38) nimmt den axialen Abstand (E) ein, die Spulen (38) sind fest mit dem Stator (42) verbunden und die Permanentmagnete (40) sind fest mit dem Rotor (12) verbunden.

2. Axial-Turbomaschine (2) nach Anspruch 1, **dadurch gekennzeichnet, dass** die innere Hülse (50) eine radiale Dicke hat, in der die ringförmige Reihe von Spulen (38) radial angeordnet ist.

3. Axial-Turbomaschine (2) nach Anspruch 2, **dadurch gekennzeichnet, dass** die innere Hülse (50) die Außenwand (52) umfasst, die einen primären Kanal des Verdichters (4; 6) und eine innere Stütze (54), in der die ringförmige Reihe von Spulen (38) oder mindestens eine Spule (38) angeordnet ist, begrenzt, wobei die innere Stütze (54) axial kürzer ist als die Außenwand (52).

4. Axial-Turbomaschine (2) nach einem der Ansprüche 1 bis 3, **dadurch gekennzeichnet, dass** mindestens eine oder jede Spule (38) der ringförmigen Reihe von Spulen ein magnetisches Kernstück (62) umfasst, das axial durch die entsprechende Spule (38) verläuft.

5. Axial-Turbomaschine (2) nach einem der Ansprüche 1 bis 4, **dadurch gekennzeichnet, dass** der Verdichter (4; 6) eine Dichtungseinrichtung (56) in der radialen Dicke der rotierenden elektrischen Maschine (30) umfasst, um eine Abdichtung zwischen dem Rotor (12) und dem Stator (42) zu gewährleisten.

6. Axial-Turbomaschine (2) nach einem der Ansprüche 1 bis 5, **dadurch gekennzeichnet, dass** der Verdichter (4; 6) einen vorderen Einlass (36) umfasst, wobei die ringförmige Reihe von Permanentmagneten (40) und/oder die ringförmige Reihe von Spulen (38) axial am vorderen Einlass (36) angeordnet sind.

7. Axial-Turbomaschine (2) nach einem der Ansprüche 1 bis 6, **dadurch gekennzeichnet, dass** der Rotor (12) einen Hauptkörper mit einem ersten Material, insbesondere einem nichtmagnetischen Material, und einem ferromagnetischen Bauteil (66) im magnetischen Kontakt mit der ringförmigen Reihe von Permanentmagneten (40) umfasst.

8. Axial-Turbomaschine (2) nach Anspruch 7, **dadurch gekennzeichnet, dass** das ferromagnetische Bauteil (66) geeignet ist, einen Magnetkreis (72) in Kombination mit einer der Spulen (38) zu bilden, wobei der genannte Magnetkreis (72) axial durch die genannte Spule (38) verläuft, das ferromagnetische Bauteil (66) eine axiale Portion (70) zwischen zwei radialen Portionen (68) umfasst.

9. Axial-Turbomaschine (2) nach einem der Ansprüche 7 bis 8, **dadurch gekennzeichnet, dass** der Rotor (12) einen beschaufelten Trommelkörper mit einem ringförmigen Schaufelkranz umfasst, wobei das ferromagnetische Bauteil (66) radial gegen den genannten Schaufelkranz gepresst ist, oder der Rotor (12) zwei beschaufelte Scheiben umfasst, wobei das ferromagnetische Bauteil (66) eine mechanische Verbindung zwischen den genannten Scheiben bildet. 10. Axial-Turbomaschine (2) nach einem der Ansprüche 1 bis 9, **dadurch gekennzeichnet, dass** der Verdichter einen axialen Abstand (76) umfasst, wobei sich die Permanentmagneten (40) axial überlagern und/oder axial durch den axialen Abstand (76) verlaufen.

10. Axial-Turbomaschine (2) nach einem der Ansprüche 1 bis 9, **dadurch gekennzeichnet, dass** der Kompressor ein axiales Spiel (76) umfasst, die Permanentmagnete (40) axial überlappen und/oder das axiale Spiel (76) axial durchqueren.

11. Axial-Turbomaschine (2) nach einem der Ansprüche 1 bis 10, **dadurch gekennzeichnet, dass** sie ein Lager (46) zur Stützung des Lüfters (16) umfasst, das sich innerhalb des Verdichters (4; 6) und axial in Höhe der ringförmigen Reihe von Spulen (38) befindet.

12. Axial-Turbomaschine (2) nach einem der Ansprüche 1 bis 11, **dadurch gekennzeichnet, dass** der Rotor (12) eine ringförmige Plattform (58) umfasst, die eine ringförmige Reihe von rotierenden Schaufeln (24) stützt, wobei die ringförmige Reihe von Magneten (40) im Inneren der ringförmigen Plattform (58) angeordnet ist, die genannten Magneten (40) in thermischem Kontakt mit der ringförmigen Reihe von rotierenden Schaufeln (24) sind.

13. Verfahren zur Verdichtung eines kompressiblen Fluides durch einen Verdichter (4; 6) einer Axial-Turbomaschine (2), **dadurch gekennzeichnet, dass** die Turbomaschine gemäß einem der Ansprüche 1 bis 12 ist, wobei die mindestens eine ringförmige Reihe von Permanentmagneten (40) fest mit dem Rotor (12) verbunden ist, und die mindestens eine ringförmige Reihe von Spulen (38) fest mit dem Stator (42) verbunden ist, wobei das Verfahren die folgenden Schritte umfasst: (a) eine Drehung (100) des Rotors (12) im Eingriff mit einer Turbine (10) stromabwärts einer Brennkammer (8) der Turbomaschine (2); und (b) eine Erzeugung (102) eines Magnetflusses innerhalb der Spulen (38), wobei die Spulen (38) axial von einem Magnetfluss durchflossen werden. 14. Verfahren nach Anspruch 13, **dadurch gekennzeichnet, dass** die Turbomaschine (2) ein Flugzeug-Turbojet ist, wobei die Temperatur der Magneten (40) während des Schritts (b) der Erzeugung (102) im Flug des Flugzeugs unter 0°C liegt und die Umgebungstemperatur des Flugzeugs ebenfalls unter 0°C liegt.

14. Verfahren nach Anspruch 13, **dadurch gekennzeichnet, dass** die Turbomaschine (2) ein Flugzeugturbinenstrahltriebwerk ist, wobei das Flugzeug während der Schritt (b) der Erzeugung (102) in der Luft ist und die Temperatur der Magnete (40) unter 0°C liegt und die Umgebungstemperatur des Flugzeugs unter 0°C liegt.

15. Verfahren nach einem der Ansprüche 13 oder 14, **dadurch gekennzeichnet, dass** während des Schritts (b) der Erzeugung (102) die Spulen (38) elektrischen Strom erzeugen, der in einem Akku (32) gespeichert wird und/oder elektrische Spannungsdifferenzen an den Anschlüssen der Spulen (38) angelegt werden, um den Rotor (12) des Verdichters (4; 6) in Rotation zu versetzen, eventuell in Kombination mit der Turbine (10).

## Claims

1. Axial turbomachine (2), notably an aircraft turbojet engine, the turbomachine (2) comprising a compressor (4; 6) with a rotor (12) and a stator (42), a turbine (10), a combustion chamber (8) axially between the compressor (4; 6) and the turbine (10), and a rotating electrical machine (30) rotationally coupled to the compressor (4; 6), the compressor (4; 6) comprising an inner shroud (50) supporting a row of stator blades (26) extending radially outwardly from the inner shroud (50), such that the inner shroud (50) comprises a wall (52) radially external with respect to the rotating electrical machine (30) and defining a primary vein of the compressor (4; 6), the rotating electrical machine (30) being with axial magnetic flux and comprising an annular row of axial magnetic flux coils (38), a first annular row of axial magnetic flux permanent magnets (40),
**characterized in that** it comprises a second annular row of axial flux permanent magnets (40), and an axial gap (E) between the first row of magnets (40) and the second row of magnets (40), said axial gap (E) being axially shorter than the external wall (52) of the shroud (50) and/or than the stator blades (26), the annular row of coils (38) occupies the axial gap (E), the coils (38) are integral with the stator (42), and the permanent magnets (40) are integral with the rotor (12).

2. Axial turbomachine (2) according to claim 1, **characterized in that** the inner shroud (50) has a radial thickness within which the annular row of coils (38) is radially disposed.

3. Axial turbomachine (2) according to claim 2, **characterized in that** the inner shroud (50) comprises the external wall (52) defining a primary vein of the compressor (4; 6) and an internal support (54) within which the annular row of coils (38) or at least one coil (38) is disposed, the internal support (54) being axially shorter than the external wall (52).

4. Axial turbomachine (2) according to one of claims 1 to 3, **characterized in that** at least one or each coil (38) of the annular row of coils comprises a magnetic core (62) axially passing through the corresponding coil (38).

5. Axial turbomachine (2) according to one of claims 1 to 4, **characterized in that** the compressor (4; 6) comprises a sealing device (56) in the radial thickness of the rotating electrical machine (30) in order to ensure sealing between the rotor (12) and the stator (42).

6. Axial turbomachine (2) according to one of claims 1 to 5, **characterized in that** the compressor (4; 6) comprises an upstream intake (36), the annular row of magnets (40) and/or the annular row of coils (38) being axially disposed at the upstream intake (36).

7. Axial turbomachine (2) according to one of claims 1 to 6, **characterized in that** the rotor (12) comprises a main body with a first material, notably a non-magnetic material, and a ferromagnetic part (66) in magnetic contact with the annular row of permanent magnets (40).

8. Axial turbomachine (2) according to claim 7, **characterized in that** the ferromagnetic part (66) is capable of forming a magnetic circuit (72) in combination with one of the coils (38), said magnetic circuit (72) axially traversing the coil (38), the ferromagnetic part (66) comprising an axial portion (70) between two radial portions (68).

9. Axial turbomachine (2) according to one of claims 7 to 8, **characterized in that** the rotor (12) comprises a bladed drum with an annular web, the ferromagnetic part (66) being radially pressed against the web, or the rotor (12) comprises two bladed discs, the ferromagnetic part (66) forming a mechanical connection between the discs.

10. Axial turbomachine (2) according to one of claims 1 to 9, **characterized in that** the compressor comprises an axial gap (76), the permanent magnets (40) axially overlapping and/or axially traversing the axial gap (76).

11. Axial turbomachine (2) according to one of claims 1 to 10, **characterized in that** it comprises a bearing (46) supporting a blower (16) disposed inside the compressor (4; 6) and axially at the level of the annular row of coils (38).

12. Axial turbomachine (2) according to one of claims 1 to 11, **characterized in that** the rotor (12) comprises an annular platform (58) supporting an annular row of rotor blades (24), the annular row of magnets (40) being disposed inside the annular platform (58), the magnets (40) being in thermal conduction with the annular row of rotor blades (24).

13. Method for compressing a compressible fluid by a compressor (4; 6) of an axial turbomachine (2) **characterized in that** the turbomachine is according to one of claims 1 to 12, at least one annular row of permanent magnets (40) being integral with the rotor (12), and at least one annular row of coils (38) being integral with the stator (42), the method comprising the following steps:
(a) rotating (100) the rotor (12) engaged with a turbine (10) downstream of a combustion chamber (8) of the turbomachine (2); and
(b) generating (102) magnetic flux inside the coils (38), the coils (38) being axially traversed by magnetic flux.

14. Method according to claim 13, **characterized in that** the turbomachine (2) is an aircraft turbojet engine, during step (b), generating (102) while the aircraft is in flight, and the temperature of the magnets (40) is below 0°C, and the environmental temperature of the aircraft is below 0°C.

15. Method according to one of claims 13 or 14, **characterized in that** during step (b) generation (102), the coils (38) produce electric current stored in an accumulator (32) and/or electric voltage differences are applied to the terminals of the coils (38) in order to rotate the rotor (12) of the compressor (4; 6), possibly in combination with the turbine (10).
